# EUROPEAN PATENT APPLICATION

(11) **EP 4 718 791 A1**
(43) Date of publication of application: **01.04.2026**
(21) Application number: 25204089.4
(22) Date of filing: 23.09.2025
(51) Int. Cl.: H04L 25/02, H04L 25/03, G06N 3/02

(54) **A MACHINE LEARNING MODEL -BASED RADIO RECEIVER WITH LOW COMPLEXITY, AND RELATED DEVICES, METHODS AND COMPUTER PROGRAMS**

(30) Priority: 25.09.2024 FI 20246158
(71) Applicant: Nokia Solutions and Networks Oy, 02610 Espoo (FI)
(72) Inventor: LEVANEN, Toni Aleksi, 33720 Tampere (FI); WABNIG, Joachim, Cambridge, CB23 6AX (GB); NIEMI, Roope Oskari, 00580 Helsinki (FI); MISHRA, Krishna Mohan, 33720 Tampere (FI)
(74) Representative: Nokia EPO representatives

(57) **Abstract**

Devices, methods and computer programs for reducing complexity of a machine learning (ML) model -based radio receiver are disclosed. At least some example embodiments may allow, for example, reducing the number of computation operations, the size of data buffers, and/or the amount of data transferred for inference processing.

## Description

### TECHNICAL FIELD

The disclosure relates generally to communications and, more particularly but not exclusively, to a machine learning model -based radio receiver with low complexity, as well as related devices, methods and computer programs.

### BACKGROUND

Implementing digital radio receiver functionality with neural networks is an emerging concept in the field of wireless communications. At least some of such neural networks may allow a fast and efficient implementation of a radio receiver using, for example, neural network chips and/or artificial intelligence (AI) accelerators. It is also likely that at least under some circumstances learning-based solutions may result in higher performance, for example, under particular channel conditions, high user equipment (UE) mobility, with sparse reference signal configurations, and/or under heavily impaired waveforms.

However, at least in some situations, practical implementations of machine learning -based digital radio receiver may benefit from lower complexity, for example, a reduced number of computation operations, a reduced size of data buffers, and/or a reduced amount of data transferred for inference processing.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a radio receiver comprises at least one processor, and at least one memory storing instructions that, when executed by the at least one processor, cause the radio receiver at least to receive a radio signal comprising information symbols. The instructions, when executed by the at least one processor, further cause the radio receiver at least to perform one or more processing tasks on the received information symbols to generate final information symbol estimates representing the received information symbols. The instructions comprise a machine learning, ML, model comprising a chain of processing blocks. The one or more processing tasks comprise an interpolation task configured to apply interpolation to data obtained based on the received information symbols for facilitating the generation of the final information symbol estimates. The chain of processing blocks comprises an interpolation processing block configured to execute the interpolation task.

In an example embodiment, alternatively or in addition to the above-described example embodiments, the one or more processing tasks further comprise an equalization task configured to apply equalization for further facilitating the generation of the final information symbol estimates. The chain of processing blocks further comprises an equalization processing block configured to execute the equalization task. The interpolation processing block is located prior to the equalization processing block in the chain of processing blocks of the ML model.

In an example embodiment, alternatively or in addition to the above-described example embodiments, the one or more processing tasks further comprise an equalization task configured to apply equalization for further facilitating the generation of the final information symbol estimates. The chain of processing blocks further comprises an equalization processing block configured to execute the equalization task. The interpolation processing block is located subsequent to the equalization processing block in the chain of processing blocks of the ML model.

In an example embodiment, alternatively or in addition to the above-described example embodiments, the one or more processing tasks further comprise a denoising task configured to apply denoising to initial channel estimates obtained from the received information symbols for further facilitating the generation of the final information symbol estimates. The chain of processing blocks further comprises a denoising processing block configured to execute the denoising task. The denoising processing block is located prior to at least one of the equalization processing block or the interpolation processing block in the chain of processing blocks of the ML model.

In an example embodiment, alternatively or in addition to the above-described example embodiments, the one or more processing tasks further comprise a channel estimate decimation task configured to apply decimation to the initial channel estimates for further facilitating the obtaining of the final information symbol estimates. The radio receiver further comprises a first channel estimate decimation processing block configured to execute the channel estimate decimation task. The first channel estimate decimation processing block is located prior to the chain of processing blocks of the ML model.

In an example embodiment, alternatively or in addition to the above-described example embodiments, the one or more processing tasks further comprise a channel estimate decimation task configured to apply decimation to intermediate channel estimates obtained from the received information symbols or to the initial channel estimates for further facilitating the obtaining of the final information symbol estimates. The chain of processing blocks further comprises a second channel estimate decimation processing block configured to execute the channel estimate decimation task. The second channel estimate decimation processing block is located subsequent or prior to the denoising processing block in the chain of processing blocks of the ML model, respectively.

In an example embodiment, alternatively or in addition to the above-described example embodiments, the one or more processing tasks further comprise an initial channel estimation task configured to apply initial channel estimation to the received information symbols for further facilitating the generation of the final information symbol estimates. The chain of processing blocks further comprises a first initial channel estimation processing block configured to execute the initial channel estimation task. The first initial channel estimation processing block is located prior to the channel estimate decimation processing block in the chain of processing blocks of the ML model.

In an example embodiment, alternatively or in addition to the above-described example embodiments, the one or more processing tasks further comprise an initial channel estimation task configured to apply initial channel estimation to the received information symbols for further facilitating the generation of the final information symbol estimates. The radio receiver further comprises a second initial channel estimation processing block configured to execute the initial channel estimation task. The second initial channel estimation processing block is located prior to the chain of processing blocks of the ML model.

In an example embodiment, alternatively or in addition to the above-described example embodiments, the interpolation task is further configured to apply the interpolation via separated linear interpolation in time domain and in frequency domain.

In an example embodiment, alternatively or in addition to the above-described example embodiments, the channel estimate decimation task is further configured to apply the decimation via resampling in frequency domain.

An example embodiment of a method comprises receiving, at a radio receiver, a radio signal comprising information symbols. The method further comprises performing, by the radio receiver, one or more processing tasks on the received information symbols to generate final information symbol estimates representing the received information symbols. The radio receiver comprises a machine learning, ML, model comprising a chain of processing blocks. The one or more processing tasks comprise an interpolation task (406) configured to apply interpolation to data obtained based on the received information symbols to for facilitating the generation of the final information symbol estimates. The chain of processing blocks comprises an interpolation processing block configured to execute the interpolation task.

An example embodiment of an apparatus comprises means for carrying out a method according to any of the above-described example embodiments.

An example embodiment of a computer program comprises instructions for causing a radio receiver to perform at least the following: receiving a radio signal comprising information symbols; and performing one or more processing tasks on the received information symbols to generate final information symbol estimates representing the received information symbols, wherein the instructions comprise a machine learning, ML, model comprising a chain of processing blocks, the one or more processing tasks comprise an interpolation task configured to apply interpolation to data obtained based on the received information symbols for facilitating the generation of the final information symbol estimates, and the chain of processing blocks comprises an interpolation processing block configured to execute the interpolation task.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG.** 1 shows an example embodiment of the subject matter described herein illustrating an example system, where various embodiments of the present disclosure may be implemented;
**FIG. 2** shows an example embodiment of the subject matter described herein illustrating a disclosed radio receiver;
**FIGS. 3A-3E** show example embodiments of the subject matter described herein illustrating example implementations of a chain of processing blocks in a disclosed machine learning model; and
**FIG. 4** shows an example embodiment of the subject matter described herein illustrating a method for a disclosed radio receiver.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

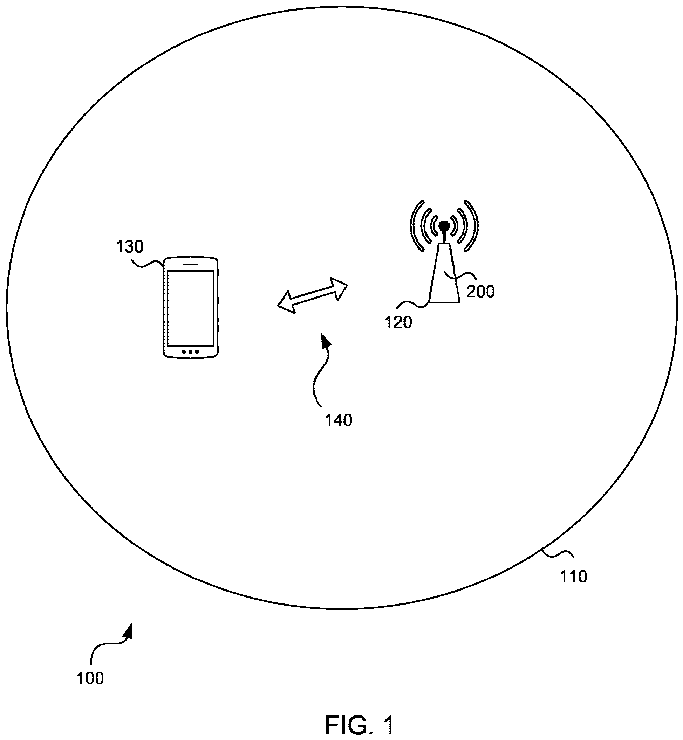

Fig. 1 illustrates example system 100, where various embodiments of the present disclosure may be implemented. System 100 may comprise, for example, fifth generation (5G) or sixth generation (6G) new radio (NR) network 110 or a network beyond 6G wireless networks. Additionally, system 100 may comprise means for a short-range wireless communication network, for example, wireless local area network (WLAN) or Bluetooth. Further, system 100 may comprise a wired or fiber optic communication network. An example representation of system 100 is shown depicting client device 130 and network node device 120 communicating with each other over radio channel 140. At least in some embodiments, network 110 may comprise one or more massive machine-to-machine (M2M) network(s), massive machine type communications (mMTC) network(s), internet of things (IoT) network(s), industrial internet-of-things (IIoT) network(s), enhanced mobile broadband (eMBB) network(s), ultra-reliable low-latency communication (URLLC) network(s), and/or the like. In other words, network 110 may be configured to serve diverse service types and/or use cases, and it may logically be seen as comprising one or more networks.

Client device 130 may include, for example, a mobile communication device, a mobile phone, a smartphone, a tablet computer, a smart watch, smart glasses, a smart audio headset, an AR/VR/XR (augmented reality, virtual reality, extended reality) device, any hand-held, portable and/or wearable device, a television, a vehicle infotainment unit, or any combination thereof. Client device 130 may also be referred to as a user equipment (UE).

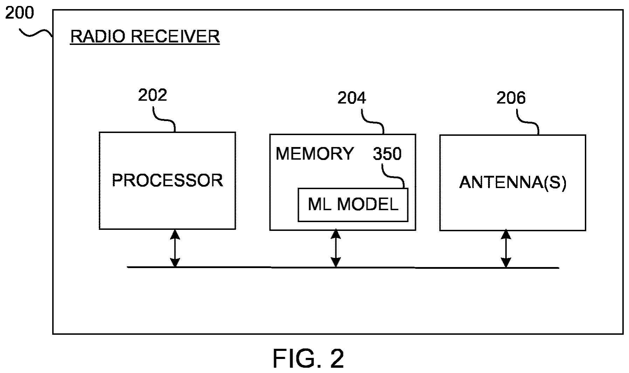

Network node device 120 may comprise, for example, a base station or a transmission and reception point (TRP). The base station or TRP may include, for example, a fifth-generation or sixth-generation base station (gNB) or any such device suitable for providing an air interface for client devices to connect to a wireless network via wireless transmissions. At least in some embodiments, network node device 120 may comprise radio receiver 200 of Fig. 2. Alternatively/additionally, client device 130 may comprise radio receiver 200 of Fig. 2.

In the following, various example embodiments will be discussed. At least some of these example embodiments described herein may allow reducing complexity of a machine learning (ML) model -based radio receiver.

Furthermore, at least some of the example embodiments described herein may allow significantly reducing the number of computation operations in a learned denoising processing block and in a non-learned (i.e., deterministic) equalization processing block of processing blocks of an ML model.

Furthermore, at least some of the example embodiments described herein may allow reducing the size of data buffers related to channel estimate storage.

Furthermore, at least some of the example embodiments described herein may allow reducing the amount of data transferred for inference processing by the ML model. Accordingly, at least some of the example embodiments described herein may allow reducing inference time in practical hardware implementations.

Furthermore, at least some of the example embodiments described herein may allow significantly reducing training time while at least maintaining performance levels or even providing performance improvements.

Furthermore, at least some of the example embodiments described herein may allow decimation of channel estimates either inside or outside the ML model, and/or to have interpolation of equalizer (EQ) weights (discussed below in more detail) inside the ML model. At least in some embodiments, this may allow reducing the number of computation operations, and/or reducing cycles in practical implementations. Further, at least in some embodiments, this may allow an enhanced learning process resulting in an enhanced performance with reduced complexity.

Furthermore, at least some of the example embodiments described herein may allow reducing memory footprint and data transfers related to initial channel estimates, and thereby reducing computational complexity and training time, when decimation of initial channel estimates is external to the ML model and interpolation of different internal coefficients is included in the ML model.

Furthermore, at least some of the example embodiments described herein may allow optimizing an average power consumption when channel estimation is fully included in the ML model.

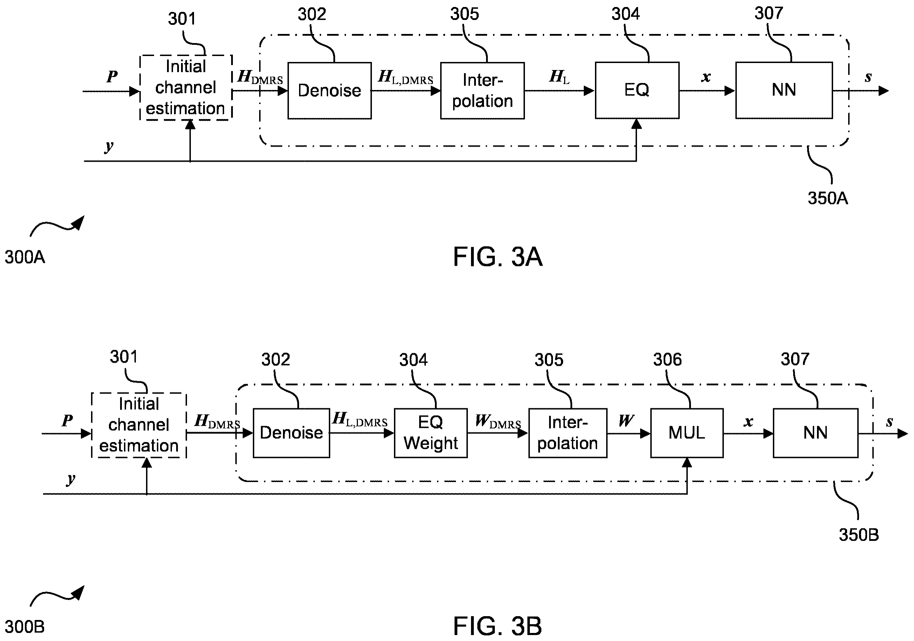

Fig. 2 is a block diagram of radio receiver 200, in accordance with an example embodiment, and diagrams 300A-300E of Figs. 3A-3E illustrate example implementations 350A-350E of a chain of processing blocks in a disclosed machine learning model that may be utilized in radio receiver 200. In Figs. 3A-3E P denotes a transmitted pilot signal, y denotes received data or information symbols (such as user data), H_{DMRS} denotes initial channel estimates (obtained from demodulation reference signal (DMRS) symbols in these examples), H_{L,DMRS} denotes denoised (for example, smoothed) intermediate channel estimates, H_{L} denotes interpolated and smoothed intermediate channel estimates (interpolated to cover dimensions of the received data), H_{DMRS,dec} denotes decimated initial channel estimates, H_{dec} denotes denoised and decimated intermediate channel estimates, W_{dec} denotes equalized intermediate channel estimates (including, for example, EQ weight matrices calculated based on the decimated and smoothed intermediate channel estimates), W_{DMRS} denotes equalized intermediate channel estimates (including, for example, EQ weight matrices calculated based on the smoothed intermediate channel estimates), W denotes interpolated intermediate channel estimates (including, for example, EQ weight matrices interpolated to cover the dimensions of the received data), x denotes initial equalized estimates of the received information symbols, s denotes an output from a demapping neural network or the like, such as soft symbol estimates or log-likelihood ratio (LLR) estimates. MUL 306 represents a multiplier block. H_{DMRS} and/or W_{DMRS} may follow time and frequency resolution of DMRS symbols.

Radio receiver 200 comprises one or more processors 202 and one or more memories 204 that comprise computer program code. Radio receiver 200 may be configured to receive information from other devices. In one example, radio receiver 200 may receive signalling information and data in accordance with at least one cellular communication protocol. Radio receiver 200 may be configured to provide at least one wireless radio connection, such as for example a 3GPP mobile broadband connection (for example, 5G or 6G). Radio receiver 200 may comprise, or be configured to be coupled to, at least one antenna 206 to receive radio frequency signals. Radio receiver 200 may also include other elements not shown in Fig. 2.

Although radio receiver 200 is depicted to include only one processor 202, radio receiver 200 may include more processors. In an embodiment, memory 204 is capable of storing instructions, such as an operating system and/or various applications. Furthermore, memory 204 may include a storage that may be used to store, for example, at least some of the information and data used in the disclosed embodiments, such as machine learning (ML) model 350A-350E described in more detail below.

Furthermore, processor 202 is capable of executing the stored instructions. In an embodiment, processor 202 may be embodied as a multi-core processor, a single core processor, or a combination of one or more multi-core processors and one or more single core processors. For example, processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 202 may be configured to execute hard-coded functionality. In an embodiment, processor 202 is embodied as an executor of software instructions, wherein the instructions may specifically configure processor 202 to perform the algorithms and/or operations described herein when the instructions are executed.

Memory 204 may be embodied as one or more volatile memory devices, one or more non-volatile memory devices, and/or a combination of one or more volatile memory devices and non-volatile memory devices. For example, memory 204 may be embodied as semiconductor memories (such as mask ROM, PROM (programmable ROM), EPROM (erasable PROM), flash ROM, RAM (random access memory), etc.

Radio receiver 200 may comprise any of various types of digital devices capable of receiving radio communication in a wireless network. At least in some embodiments, radio receiver 200 may be included in network node device 120 and/or in client device 130. At least in some embodiments, radio receiver 200 may comprise a multiple-input and multiple-output (MIMO) capable radio receiver.

When executed by at least one processor 202, instructions stored in at least one memory 204 cause radio receiver 200 at least to receive a radio signal comprising information symbols. For example, the received radio signal may comprise an orthogonal frequency-division multiplexing (OFDM) radio signal. For example, the information symbols may comprise DMRS symbols. At least in some embodiments, the radio signal may be received from client device 130 over radio channel 140. At least in some embodiments, the received radio signal may include a known reference signal, such as a known pilot signal. Further, the received radio signal may include user data.

The instructions, when executed by at least one processor 202, further cause radio receiver 200 at least to perform one or more processing tasks on the received information symbols to generate final information symbol estimates (such as soft quadrature amplitude modulation (QAM) symbol estimates or bit wise LLRs) representing the received information symbols. The instructions comprise ML model 350, 350A-350E comprising a chain of processing blocks. At least in some embodiments, ML model 350, 350A-350E may be a hybrid ML model in which chain of processing blocks has one or more learned processing blocks and one or more non-learned processing blocks. In other, words, herein the term "hybrid" is used to refer to the presence of both learned processing block(s) and non-learned processing block(s). For example, in the example embodiments of Figs. 3A-3E blocks 302, 307 may comprise learned processing blocks, while the rest of the blocks may comprise learned processing blocks.

The one or more processing tasks comprise an interpolation task configured to apply interpolation to data (for example, equalizer weight matrices described below in more detail) obtained based on the received information symbols for facilitating the generation of the final information symbol estimates. The chain of processing blocks comprises interpolation processing block 305 configured to execute the interpolation task. At least in some embodiments, the interpolation task may be further configured to apply the interpolation via separated linear interpolation in time domain and in frequency domain. At least in some embodiments, interpolation processing block 305 may be a non-learned processing block. Alternatively, interpolation processing block 305 may be a learned processing block.

For example, interpolation processing block 305 may include a two-dimensional (2D) interpolator that, at least in some embodiments, may be configured to interpolate initial channel estimates (for example, two DMRS symbols resulting in channel estimates for every second subcarrier for DMRS type 1). In other words, the interpolation may interpolate those to cover all symbols per slot.

In other words, herein the interpolation may include interpolating computed equalizer weight matrices (described below in more detail) over a frequency axis to cover dimensions of the received data. For example, when there are four equalizer weight matrices per physical resource block (PRB), then after interpolation there may be twelve equalizer weight matrices per PRB.

At least in some embodiments, the one or more processing tasks may further comprise an equalization task configured to apply equalization for further facilitating the generation of the final information symbol estimates. The chain of processing blocks may further comprise equalization processing block 304 (or one or more equalization processing blocks as described in more detail below) configured to execute the equalization task. At least in some embodiments, equalization processing block 304 may be a non-learned processing block.

At least in some embodiments, interpolation processing block 305 may be located prior to equalization processing block 304 in the chain of processing blocks of ML model 350A.

In other words, at least in some embodiments, time and frequency domain interpolation may be integrated as part of ML model 350A-350E. This may result in reducing the amount of data stored in static random-access memory (SRAM) and transferred to ML model 350A-350E, and at least in some embodiments in reducing the size of denoising processing block 302 by a factor of 14. When discussing interpolation as part of ML model 350A-350E, separated linear interpolation in time and frequency is assumed at least in some embodiments. Other solutions may also be used, but linear interpolation may offer a good balance between performance and implementation complexity at least in some embodiments.

At least in some embodiments, a reduction factor of 14 may be obtained for a 5G uplink (UL) slot assuming physical uplink shared channel (PUSCH) allocation over 14 OFDM symbols, 2 single-DMRS symbols per slot, and DMRS Type 1 being used (but interpolation being outside ML model 350A-350E). Moving the interpolation inside ML model 350A-350E may imply that instead of moving channel estimates for all OFDM symbols to the model, only channel estimates obtained from DMRS symbols are provided. This may provide a reduction factor of 7. Then, DMRS Type 1 may assume a comb-2 pattern in frequency, basically allocating a DMRS symbol on every second resource element (RE) per layer. Removing unused REs from channel estimates may allow reducing the amount of data by a factor of 2. Together these may lead to a 14x reduction in data amounts (and in complexity of denoising processing block 302).

Different numbers of DMRS symbols per slot or changing to DMRS Type 2 may lead to different savings in data storage, data movement, and computation.

Alternatively, at least in some embodiments, interpolation processing block 305 may be located subsequent to equalization processing block 304 in the chain of processing blocks of ML model 350B-350E.

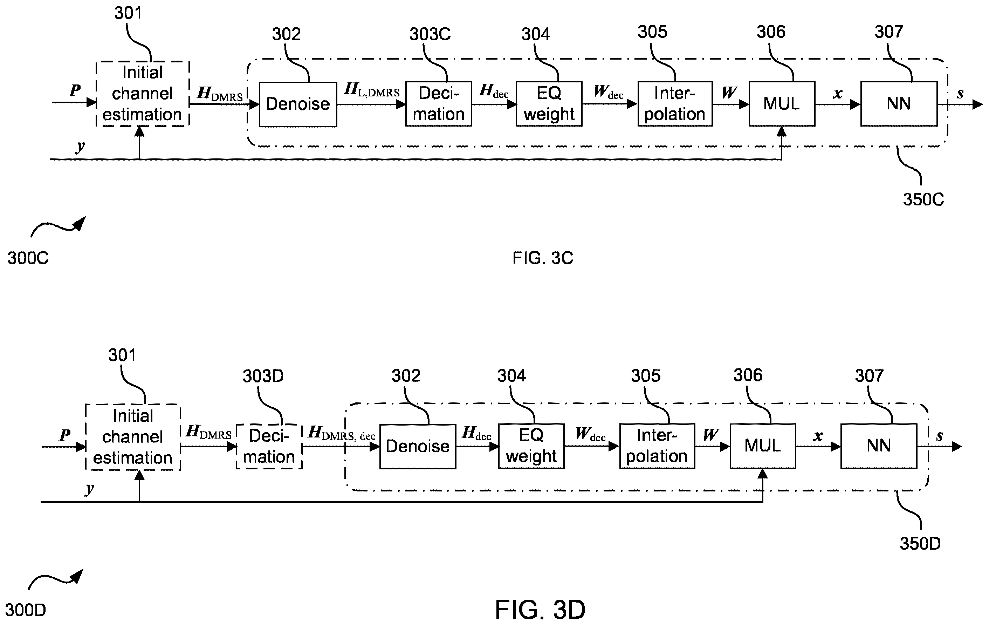

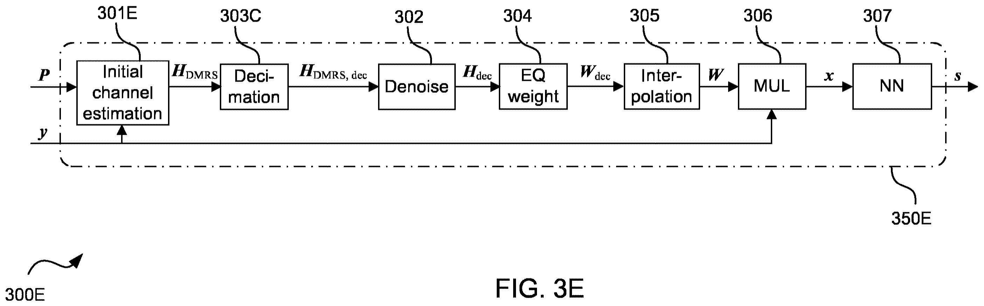

In other words, at least in some embodiments, interpolation processing block 305 may be located further up the processing chain, as illustrated in Figs. 3B, 3C, 3D, 3E. As shown, instead of interpolating channel estimates, outputs from equalization processing block 304 are now interpolated. These may comprise equalization weight matrices.

At least in some embodiments, this ML model architecture of Figs. 3B, 3C, 3D, 3E may allow obtaining at least slightly better performance in certain use cases, for example, in a 16x8 use case where 8 layers are detected from 16 input streams. In addition, this change may allow reducing training time approximately 30%. In turn, reducing training time may allow reducing development time.

At least in some embodiments, having interpolation processing block 305 at the output of equalization processing block 304 may allow reducing equalization processing complexity with a factor of 14. In terms of the latency of running ML model 350A-350E on inference acceleration hardware, this may map to, for example, 93% reduction in the latency of equalization processing block 304.

At least in some embodiments, equalization processing block 304 may be considered in a general sense, meaning that there may be one or more equalization functions inside each equalization processing block 304, and there may be one or more different solutions in parallel, for example, equalization functions based on maximum ratio combining (MRC), zero forcing (ZF), or interference rejection combining (IRC). In the case of IRC, or any equalization solution that may need information related to an interference covariance matrix, it is to be noted that the channel estimates obtained from the output of denoising processing block 302 may need to be interpolated to an original frequency density before calculating subcarrier specific interference vectors used to derive estimates of interference covariance matrices.

In other words, herein the equalization may include solving equalizer weights. When the interpolation is before the equalization, the equalization may directly apply the equalizer weights to the received data and the outputs may include symbol estimates. When the interpolation is after the equalization, the EQ weight matrices may first be solved and stored, then those may be interpolated, and then the interpolated EQ weight matrices may be applied to the received data.

At least in some embodiments, the one or more processing tasks may further comprise a denoising task configured to apply denoising (or smoothing) to initial channel estimates obtained from the received information symbols for further facilitating the generation of the final information symbol estimates. The chain of processing blocks may further comprise denoising processing block 302 configured to execute the denoising task. In other words, at least in some embodiments, denoising processing block 302 may be configured to improve channel estimate quality based on initial channel estimate inputs.

Denoising processing block 302 may be located prior to equalization processing block 304 and/or interpolation processing block 305 in the chain of processing blocks of ML model 350A-350E. At least in some embodiments, denoising processing block 302 may be a learned processing block (for example, denoising processing block 302 may comprise a convolutional neural network (CNN)). Alternatively, denoising processing block 302 may be a non-learned processing block.

At least in some embodiments, the one or more processing tasks may further comprise a channel estimate decimation task configured to apply decimation to intermediate channel estimates obtained from the received information symbols or to the initial channel estimates for further facilitating the obtaining of the final information symbol estimates. For example, the channel estimate decimation task may be further configured to apply the decimation by reducing the number of the initial channel estimates, for example, via resampling in frequency domain.

The chain of processing blocks may further comprise second channel estimate decimation processing block 303C configured to execute the channel estimate decimation task. Second channel estimate decimation processing block 303C may be located subsequent or prior to denoising processing block 302 in the chain of processing blocks of ML model 350C, 350E, respectively.

In other words, at least in some embodiments, frequency domain channel estimate decimation may be added to ML model 350C, 350E. The fundamental idea of channel estimate decimation is that, as the DMRS Type 1 allows 6 channel estimates per PRB, a decimation matrix may resample these to fixed 4 locations per PRB. At least in some embodiments, this may have two main benefits: firstly, this may reduce equalization computation by 33% versus an architecture without channel estimate decimation. Secondly, this may solve the issue of non-aligned channel estimates between different spatial layers. It should be noted that other values for decimated output may be used.

Accordingly, at least in some embodiments, a ML model 350A-350E based solution may not need the full frequency domain resolution of 5G NR DMRS Type 1 symbols in equalization processing block 304 for a good link level performance.

In 5G NR DMRS Type 1 definition, DMRS symbols for different spatial layers are transmitted either in even or odd subcarriers. This may require that the channel estimates need to be interpolated or resampled to obtain channel estimates for all layers in the frequency points where equalization weights are computed. At least the disclosed architecture of ML model 350C, 350E may automatically solve this issue.

At least with the disclosed architecture of ML model 350C, 350E, a total latency of inference may be reduced by 48% in a 4x2 use case and by 62% in a 16x4 use case. These numbers indicate the significance of the disclosure on practical latency of the disclosed ML model running on real hardware.

Accordingly, at least in some embodiments, the channel estimate and equalization weight frequency resolution inside the disclosed ML model may be decreased without significant impact on the performance.

Alternatively, at least in some embodiments, radio receiver 200 may further comprise first channel estimate decimation processing block 303D configured to execute the channel estimate decimation task. First channel estimate decimation processing block 303D may be located prior to the chain of processing blocks of ML model 350D.

In other words, at least in some embodiments, first channel estimate decimation processing block 303D may be located outside ML model 350D. This may allow reducing memory footprint and data transfer rates for the channel estimates that are fed into ML model 350D. When utilizing larger numbers of receive (RX) antennas and layers, memory consumption of initial channel estimates may be significant. It should be noted that other decimation factors may be used, and that the decimation factor may be UE specific, for example, based on a used modulation order.

Thus, the embodiment of Fig. 3D may allow, in addition to benefits on memory consumption and data transfer rates, further reducing complexity of denoising processing block 302. Also, in this scenario, 5G NR DMRS Type 1 frequency density may be over-dimensioned and a ML model 350D based solution may work with reduced DMRS density.

At least in some embodiments, first and/or second channel estimate decimation processing blocks 303D, 303C may be non-learned processing blocks. Alternatively, first and/or second channel estimate decimation processing blocks 303D, 303C may be learned processing blocks.

At least in some embodiments, the one or more processing tasks may further comprise an initial channel estimation task configured to apply initial channel estimation to the received information symbols for further facilitating the generation of the final information symbol estimates.

Radio receiver 200 may further comprise second initial channel estimation processing block 301 configured to execute the initial channel estimation task. Second initial channel estimation processing block 301 may be located prior to the chain of processing blocks of ML model 350A-350D.

Alternatively, at least in some embodiments, the chain of processing blocks may further comprise first initial channel estimation processing block 301E configured to execute the initial channel estimation task. First initial channel estimation processing block 301E may be located prior to channel estimate decimation processing block 303C in the chain of processing blocks of ML model 350E.

In other words, at least in some embodiments, when first initial channel estimation processing block 301E is a part of ML model 350E, it may allow enhanced data transfer savings and data flow optimization, as the need to store raw channel estimates to memory 204 of radio receiver 200 may be removed, and also the need to move the raw channel estimates from memory 204 to processor 202 may be removed regarding memory footprint, same gains are maintained, although now the savings are in the inference hardware accelerator internal memory consumption, rather than in the shared RAM.

At least in some embodiments, first and/or second initial channel estimation processing blocks 301E, 301 may be non-learned processing blocks. Alternatively, first and/or second initial channel estimation processing blocks 301E, 301 may be learned processing blocks.

At least in some embodiments, the one or more processing tasks may further comprise a demapping task configured to apply demapping to the intermediate channel estimates for further facilitating the generation of the final information symbol estimates, for example, by enhancing EQ 304 outputs. The chain of processing blocks may further comprise neural network (NN) block 307 configured to execute the demapping task. NN block 307 may be located subsequent to equalization processing block 304 or multiplier block 306 (and interpolation processing block 305) in the chain of processing blocks of ML model 350A, 350B- 350E, respectively. At least in some embodiments, NN block 307 may be a learned processing block. For example, NN block 307 may comprise a convolutional neural network (CNN).

At least in some embodiments, the instructions, when executed by at least one processor 202, may further cause radio receiver 200 to output the generated final information symbol estimates.

In summary, when denoising processing block 302 works on non-interpolated channel estimates, it may provide a significant (~30%) reduction in TFLOPS (tera FLOPS or 10¹² floating point operations per second). When equalization processing block 304 also runs on non-interpolated, smoothed channel estimates, it may provide a significant reduction in the training time (~30%). At least in some embodiments, functions related to equalization processing may have a significant impact on training time, and the disclosed architecture may allow reducing both TFLOPS and training time significantly.

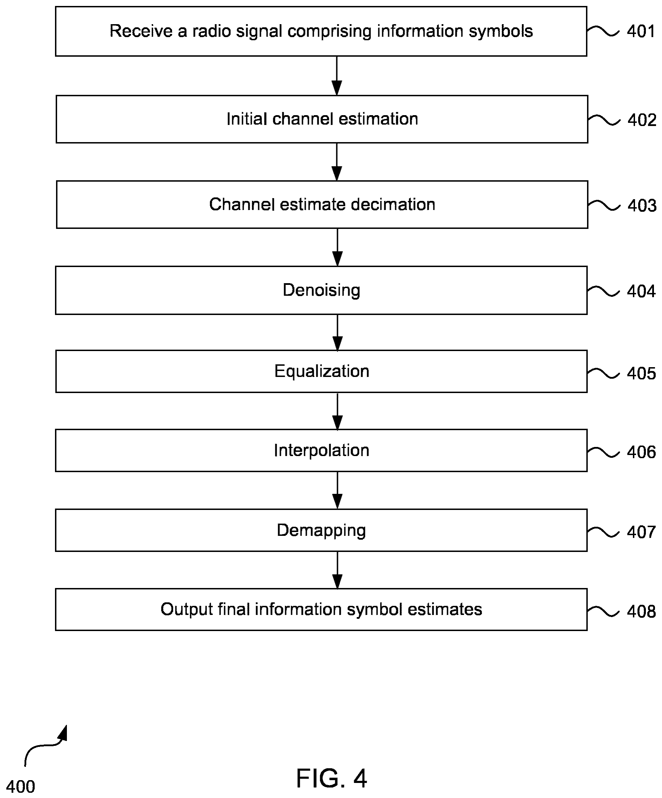

Fig. 4 illustrates an example flow chart of a method 400, in accordance with an example embodiment.

At operation 401, the radio signal comprising the information symbols is received at radio receiver 200.

At optional operation 402, radio receiver 200 may apply initial channel estimation processing block 301 or 301E to execute the initial channel estimation task to apply the initial channel estimation to the received information symbols for further facilitating the generation of the final information symbol estimates.

At optional operation 403, radio receiver 200 may apply channel estimate decimation processing block 303C or 303D to apply the decimation to the intermediate channel estimates or to the initial channel estimates for further facilitating the obtaining of the final information symbol estimates.

At optional operation 404, radio receiver 200 may apply denoising processing block 302 to execute the denoising task to apply the denoising to the initial channel estimates obtained from the received information symbols for further facilitating the generation of the final information symbol estimates. In some embodiments, operation 404 may be performed prior to operation 403.

At optional operation 405, radio receiver 200 may apply equalization processing block 304 to apply the equalization for further facilitating the generation of the final information symbol estimates.

At operation 406, radio receiver 200 applies interpolation processing block 305 to execute the interpolation task to apply interpolation to data obtained based on the received information symbols for facilitating the generation of the final information symbol estimates.

At optional operation 407, radio receiver 200 may apply NN block 308 to execute the demapping task to apply the demapping to the intermediate channel estimates obtained from the received information symbols to further enhance the intermediate channel estimates for facilitating the generation of the final information symbol estimates.

At optional operation 408, radio receiver 200 may output the generated final information symbol estimates.

Embodiments and examples with regard to Fig. 4 may be carried out by radio receiver 200 of Fig. 2. Operations 401-408 may, for example, be carried out by at least one processor 202 and at least one memory 204. Further features of method 400 directly resulting from the functionalities and parameters of radio receiver 200 are not repeated here. Method 400 can be carried out by computer program(s) or portions thereof.

Another example of an apparatus suitable for carrying out the embodiments and examples with regard to Fig. 4 comprises means for:
receiving, at operation 401, a radio signal comprising information symbols; and
performing, at operation(s) 402-408, one or more processing tasks on the received information symbols to generate final information symbol estimates representing the received information symbols,
wherein the means comprise a machine learning (ML) model comprising a chain of processing blocks, the one or more processing tasks comprise an interpolation task configured to apply interpolation to data obtained based on the received information symbols for facilitating the generation of the final information symbol estimates, and the chain of processing blocks comprises an interpolation processing block configured to execute the interpolation task.

The functionality described herein can be performed, at least in part, by one or more computer program product components such as software components. According to an embodiment, radio receiver 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

In the disclosed example embodiments, it may be possible to train one ML model / NN with a specific architecture, then derive another ML model / NN from that using processes such as compilation, pruning, quantization or distillation. The ML model / NN may be executed using any suitable apparatus, for example a CPU, GPU, ASIC, FPGA, compute-in-memory, analog, or digital, or optical apparatus. It is also possible to execute the ML model / NN in an apparatus that combines features from any number of these, for instance digital-optical or analog-digital hybrids. In some examples, weights and required computations in these systems may be programmed to correspond to the ML model / NN. In some examples, the apparatus may be designed and manufactured so as to perform the task defined by the ML model / NN so that the apparatus is configured to perform the task when it is manufactured without the apparatus being programmable as such.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A radio receiver (200), comprising:
at least one processor (202); and
at least one memory (204) storing instructions that, when executed by the at least one processor (202), cause the radio receiver (200) at least to:
receive a radio signal comprising information symbols; and
perform one or more processing tasks on the received information symbols to generate final information symbol estimates representing the received information symbols,
wherein the instructions comprise a machine learning, ML, model (350, 350A-350E) comprising a chain of processing blocks, the one or more processing tasks comprise an interpolation task configured to apply interpolation to data obtained based on the received information symbols for facilitating the generation of the final information symbol estimates, and the chain of processing blocks comprises an interpolation processing block (305) configured to execute the interpolation task,
and wherein the one or more processing tasks further comprise an equalization task configured to apply equalization for further facilitating the generation of the final information symbol estimates, the chain of processing blocks further comprises an equalization processing block (304) configured to execute the equalization task, and the interpolation processing block (305) is located subsequent to the equalization processing block (304) in the chain of processing blocks of the ML model (350B-350E).

2. The radio receiver (200) according to claim 1, wherein the one or more processing tasks further comprise a denoising task configured to apply denoising to initial channel estimates obtained from the received information symbols for further facilitating the generation of the final information symbol estimates, the chain of processing blocks further comprises a denoising processing block (302) configured to execute the denoising task, and the denoising processing block (302) is located prior to at least one of the equalization processing block (304) or the interpolation processing block (305) in the chain of processing blocks of the ML model (350A-350E) .

3. The radio receiver (200) according to claim 2, wherein the one or more processing tasks further comprise a channel estimate decimation task configured to apply decimation to the initial channel estimates for further facilitating the obtaining of the final information symbol estimates, the radio receiver (200) further comprises a first channel estimate decimation processing block (303D) configured to execute the channel estimate decimation task, and the first channel estimate decimation processing block (303D) is located prior to the chain of processing blocks of the ML model (350D).

4. The radio receiver (200) according to claim 2, wherein the one or more processing tasks further comprise a channel estimate decimation task configured to apply decimation to intermediate channel estimates obtained from the received information symbols or to the initial channel estimates for further facilitating the obtaining of the final information symbol estimates, the chain of processing blocks further comprises a second channel estimate decimation processing block (303C) configured to execute the channel estimate decimation task, and the second channel estimate decimation processing block (303C) is located subsequent or prior to the denoising processing block (302) in the chain of processing blocks of the ML model (350C, 350E), respectively.

5. The radio receiver (200) according to claim 4, wherein the one or more processing tasks further comprise an initial channel estimation task configured to apply initial channel estimation to the received information symbols for further facilitating the generation of the final information symbol estimates, the chain of processing blocks further comprises a first initial channel estimation processing block (301E) configured to execute the initial channel estimation task, and the first initial channel estimation processing block (301E) is located prior to the channel estimate decimation processing block (303C) in the chain of processing blocks of the ML model (350E).

6. The radio receiver (200) according to any of claims 1 to 5, wherein the one or more processing tasks further comprise an initial channel estimation task configured to apply initial channel estimation to the received information symbols for further facilitating the generation of the final information symbol estimates, the radio receiver (200) further comprises a second initial channel estimation processing block (301) configured to execute the initial channel estimation task, and the second initial channel estimation processing block (301) is located prior to the chain of processing blocks of the ML model (350A-350D).

7. The radio receiver (200) according to any of claims 1 to 6, wherein the interpolation task is further configured to apply the interpolation via separated linear interpolation in time domain and in frequency domain.

8. The radio receiver (200) according to any of claims 3 to 7, wherein the channel estimate decimation task is further configured to apply the decimation via resampling in frequency domain.

9. A method (400), comprising:
receiving (401), at a radio receiver (200), a radio signal comprising information symbols; and
performing, by the radio receiver (200), one or more processing tasks (402-408) on the received information symbols to generate final information symbol estimates representing the received information symbols,
wherein the radio receiver (200) comprises a machine learning, ML, model (350, 350A-350E) comprising a chain of processing blocks, the one or more processing tasks comprise an interpolation task (406) configured to apply interpolation to data obtained based on the received information symbols for facilitating the generation of the final information symbol estimates, and the chain of processing blocks comprises an interpolation processing block (305) configured to execute the interpolation task (406),
and wherein the one or more processing tasks further comprise an equalization task configured to apply equalization for further facilitating the generation of the final information symbol estimates, the chain of processing blocks further comprises an equalization processing block (304) configured to execute the equalization task, and the interpolation processing block (305) is located subsequent to the equalization processing block (304) in the chain of processing blocks of the ML model (350B-350E).

10. An apparatus, comprising means for carrying out the method (400) according to claim 9.

11. A computer program comprising instructions for causing a radio receiver to perform at least the following:
receiving a radio signal comprising information symbols; and
performing one or more processing tasks on the received information symbols to generate final information symbol estimates representing the received information symbols,
wherein the instructions comprise a machine learning, ML, model comprising a chain of processing blocks, the one or more processing tasks comprise an interpolation task configured to apply interpolation to data obtained based on the received information symbols for facilitating the generation of the final information symbol estimates, and the chain of processing blocks comprises an interpolation processing block configured to execute the interpolation task,
and wherein the one or more processing tasks further comprise an equalization task configured to apply equalization for further facilitating the generation of the final information symbol estimates, the chain of processing blocks further comprises an equalization processing block (304) configured to execute the equalization task, and the interpolation processing block (305) is located subsequent to the equalization processing block (304) in the chain of processing blocks of the ML model (350B-350E).

12. A network node device (120) comprising the radio receiver (200) according to any of claims 1 to 8.

13. A client device (130) comprising the radio receiver (200) according to any of claims 1 to 8.
